**Europäisches Patentamt**

**European Patent Office**

**Office européen des brevets**

(19)

(11) Veröffentlichungsnummer: **0 233 980 B1**

(12)

# EUROPÄISCHE PATENTSCHRIFT

(45) Veröffentlichungstag der Patentschrift: **26.02.92**

(51) Int. Cl.5: **B01D 25/12**

(21) Anmeldenummer: **86105922.8**

(22) Anmeldetag: **29.04.86**

(54) **Membranfilterplatte für eine Filterpresse oder dergleichen mit Stütznocken.**

(30) Priorität: **25.02.86 DE 8605058 U**

(43) Veröffentlichungstag der Anmeldung:
**02.09.87 Patentblatt 87/36**

(45) Bekanntmachung des Hinweises auf die
Patenterteilung:
**26.02.92 Patentblatt 92/09**

(84) Benannte Vertragsstaaten:
**AT BE CH DE FR GB IT LI LU NL SE**

(56) Entgegenhaltungen:
**EP-A- 0 081 715**
**GB-A- 1 035 190**
**GB-A- 2 069 358**
**GB-A- 2 091 575**

(73) Patentinhaber: **Klinkau & Co. GmbH**
**Raiffeisenstrasse 6**
**W-8952 Marktoberdorf-Leuterschach(DE)**

(72) Erfinder: **Stanik, Reimund**
**Bischof-Ketteler-Strasse 10**
**W-8952 Marktoberdorf(DE)**

(74) Vertreter: **Goddar, Heinz J., Dr. et al**
**FORRESTER & BOEHMERT Widenmayerstrasse 4/I**
**W-8000 München 22(DE)**

**Beschreibung**

Die Erfindung betrifft ein Verfahren zum Umgestalten einer Membranfilterplatte für eine Filterpresse oder dergleichen, die für den Eckeinlauf des zu filternden Mediums ausgelegt ist, für Zentraleinlaufanwendungsfälle.

Aus der EP-A 0 081 715 ist eine Membranfilterplatte, besser: eine Membranfilterplatte bekannt, welche eine einstückig aus Kunststoff hergestellte Trägerplatte aufweist, wenigstens eine an einer Seite der Trägerplatte angeordnete, vorzugsweise mit Distanznoppen oder der dergleichen zum Auflegen eines Filtertuches oder dergleichen versehene Membran und einen die Trägerplatte und die Membran umgebenden, diese im wesentlichen fließmitteldicht miteinander verbindenden Dichtrand. Die der Trägerplattenmittelebene parallele Dichtfläche des Dichtrandes ist auf der die Membran aufweisenden Seite bzw. beiderseits der Trägerplatte mit Abstand von der Ebene der Membran in deren unbelasteter Normalstellung angeordnet. Dabei ist im Zentralbereich der Trägerplatte wenigstens ein zu einer Normalen zur Trägerplattenmittelebene rotationssymmetrischer, einstückig mit der Trägerplatte ausgebildeter Stütznocken vorgesehen, dessen der Trägerplattenmittelebene parallele Stirnfläche im wesentlichen mit der der Trägenplattenebene parallelen Dichtfläche des Dichtrandes fluchtet. Der Stütznocken weist seitlich eine der Membran zugewandte rotationssymetrische Übergangsfläche auf, die schräg in Richtung auf die Trägerplattenmittelebene hin verläuft und die von einer Verbindungslinie der Membran mit dem Stütznocken aus zur Erzeugung je einer Soll-Biegelinie für die Filtrations- bzw. die Abpreßphase zunächst im wesentlichen parallel zur Trägerplattenmittelebene dann schräg unter einem Winkel von 3° bis 15° auf diese hin verläuft.

Generell sind bisher einerseits Membrankammerfilterplatten mit Zentraleinlauf bekannt, bei denen der Filterspiegel mittels einer Reihe außerhalb des Zentraleinlaufes liegender Stütznocken abgestützt wird, oder aber es ist wie bei der Membranfilterplatte nach der EP-A 0 081 715 ein Eckeinlauf vorgesehen, wobei dies den Vorteil einer großen, freien Membran mit nicht veränderbarem Einlaufquerschnitt hat; außerdem ist dabei der Filterkuchen nicht mehr unterbrochen, da ja der diesbezüglich störende Einlauf des Filterspiegels in einer Eckeinlaufbohrung oder aber auch etwa in der Mitte einer Seite des Dichtrandes zwischen zwei Eckbohrungen liegt.

Die in der EP-A 0 081 715 beschriebene Membranfilterplatte hat sich durchaus bewährt, jedoch ist der Zentraleinlauf wegen des symmetrischeren Filtrationsverhaltens bei manchen Anwendungszwecker von größerem Vorteil.

Es ist daher die Aufgabe der Erfindung, eine Membrankammerfilterplatte zur Verfügung zu stellen, die so konzipiert ist, daß mit ihr je nach Bedarf

- ein Eckeinlauf und Abstützung im Zentrum,
- ein Zentraleinlauf und Abstützung im Zentrum,
- ein Zentraleinlauf ohne Abstützung im Zentrum

realisiert werden kann.

Diese Aufgabe wird von einem Verfahren nach Patentanspruch 1 gelöst. Vorteilhafte Ausgestaltungen des Verfahrens sind Gegenstand der Unteransprüche.

Der Gedanke der Erfindung besteht darin, den Stütznocken bis auf die Ebene der Auflagefläche der Membran abzuztragen, vorzugsweise abzufräsen, und mit einer die gesamte Trägerplatte durchsetzenden Zentralbohrung zu versehen, die über in einer Seitenfläche, welche an die Stirnfläche anschließt und zur Verbindungslinie der Membran mit dem Stütznocken abfällt, vorgesehene Durchbrechungen mit der jeweiligen Filterkammer kommuniziert, wobei die Seitenfläche des Stütznockens Bestandteil eines an die Trägerplatte anzusetzenden Stützringes ist.

Es kann vorgesehen sein, daß auf der durch Abtragen entstandenen Ringfläche des Stütznockens ein Stützring gesetzt wird.

Dabei sieht die Erfindung gegebenenfalls vor, daß in die Ringfläche des Stütznockens eine Zentriernut eingearbeitet wird, in die eine am Stützring vorgesehene Zentrierwulst eingreift, oder umgekehrt.

Vorteilhaft ist es, wenn die am Stütznocken vorgesehene Seitenfläche rotationssymetrisch abgeschrägt ist.

Weiterhin kann der Stützring mit der Trägerplatte verschraubt werden.

Besonders bevorzugt ist es, wenn der Stützring als Filtertuchverschraubung ausgebildet ist.

Dabei kann die Zentrierwulst als Halterung für das Filtertuch ausgebildet sein.

Schließlich schlägt die Erfindung auch vor, daß lediglich ein einziger, mittig auf der Trägerplatte angeordneter Stütznocken vorgesehen ist.

Durch die Erfindung werden die Nachteile der bisher bekannten Membranfilterplattensysteme, wie eingangs beschrieben, vermieden. Statt dessen wird eine Membrankammerfilterplatte mit variablem Einlauf geschaffen, welche im Bereich des Stütznockens grundsätzlich das "Doppelscharnierprinzip" bzw. das Prinzip der Vermeidung definierter Biegelinien verwirklicht, wie es in der EP-A 0 081 715 beschrieben ist, so daß auf die diesbezügliche Beschreibung zur weiteren Erläuterung verwiesen wird. Die Oberfläche der Membran ist mit Distanznocken versehen, die Trägerplattenoberfläche kann profiliert sein, um eine Kühl- und Heizbarkeit zu ermöglichen, wie dies ebenfalls in der vorstehend beschriebenen EP-A 0 081 715 erläutert ist. Natürlich ist es nicht nur möglich, die Trägerplatte mit der Membran einstückig herzustellen, vielmehr kann auch eine auswechselbare Membran vorgesehen sein, wie dies in der DE-U 85 16 901 beschrieben ist.

Da der zentrale Stütznocken - natürlich könnten auch zwei oder mehr Stütznocken bei entsprechend großen Platten vorgesehen sein - den Filterspiegel hält, lassen sich auch größere Membranplatten, mit Abmessungen von mehr als 1200 x 1200 mm, mit Eckeinlauf oder mit Außeneinlauf herstellen, ohne daß in der bisher bereits bei relativ kleinen Abmessungen notwendigen Weise vier Stütznocken benötigt wurden, die den Filterkuchen unterbrechen oder die freie Membranlänge verkürzen. Der zentrale Stütznocken ist dabei so gestaltet, daß er mit wenigen Arbeitsgängen zum Zentraleinlauf umfunktioniert werden kann, nämlich durch Abfräsen und bedarfsweises Aufsetzen eines Stützringes beispielsweise, so daß ein und die gleiche Membranplatte je nach Kundenbedarf mit Zentraleinlauf oder aber einem Einlauf außerhalb des Filterspiegels hergestellt werden kann. Der zentrale Stütznocken ist dabei vorzugsweise so ausgebildet, daß er mit einer abstützenden Filtertuchverschraubung oder mit einer Zentraleinlaufabstützung versehen werden kann, so daß der gefährdete Einlaufbereich abgestützt ist und sich während der Filtration nicht bewegen kann. Zusammenfassend läßt sich feststellen, daß die erfindungsgemäße Membranfilterplatte für mehrere, verschiedene Einlaufsysteme ohne großen Arbeits- und Kostenaufwand modifizierbar ist, der Filterspiegel infolge des Abstützens der Membran vorzugsweise nur mit einem einzigen Stütznocken unter Gewährleistung langer Membranwege abgestützt ist, bei Zentraleinlauf keine Unterbrechungen des Filterspiegels vorliegen, da ja der Zentraleinlauf selbst abstützen kann, so daß ein nicht unterbrochener Kuchenaufbau möglich ist. Außerdem resultiert ein größeres Filtervolumen durch den Wegfall der bisher erforderlichen mehreren Stütznocken, auch ist um die Stütznocken herum kein vorzeitiges Brechen der Membran wegen der mit den Stütznocken ansonsten unvermeidbar verbundenen Schwachstellen gewährleistet.

Weitere Merkmale und Vorteile der Erfindung ergeben sich aus der nachstehenden Beschreibung, in der Ausführungsbeispiele anhand der schematischen Zeichnung im einzelnen erläutert sind. Dabei zeigt:

Fig. 1    ein erstes Ausführungsbeispiel einer Membranfilterplatte nach der Erfindung in der Draufsicht, teilweise geschnitten, mit Eckeinlauf;

Fig. 2    einen Schnitt entlang der Linie II-II von Fig. 1;

Fig. 3    den Stütznockenbereich des Ausführungsbeispieles von Fig. 1 und 2 in vergrößerter Detaildarstellung in einer Schnittdarstellung analog zu Fig. 2, wobei zwei aneinanderliegende Stütznocken zweier miteinander in einer Filterpresse verbundener Membranfilterplatten wiedergegeben sind;

Fig. 4    ein zweites Ausführungsbeispiel einer Membranfilterplatte nach der Erfindung mit Zentraleinlauf in der Draufsicht;

Fig. 5    einen Schnitt entlang der Linie V-V von Fig. 4;

Fig. 6    einen Schnitt entlang der Linie VI-VI von Fig. 4, wobei hier im Gegensatz zu Fig. 4 der Zentraleinlauf von einem Stützring umgeben ist; und

Fig. 7    den Stützringbereich des Ausführungsbeispieles von Fig. 6 in vergrößerter Darstellung, wobei hier zwei Membranfilterplatten gezeigt sind, die in einer Filterpresse miteinander verbunden sind.

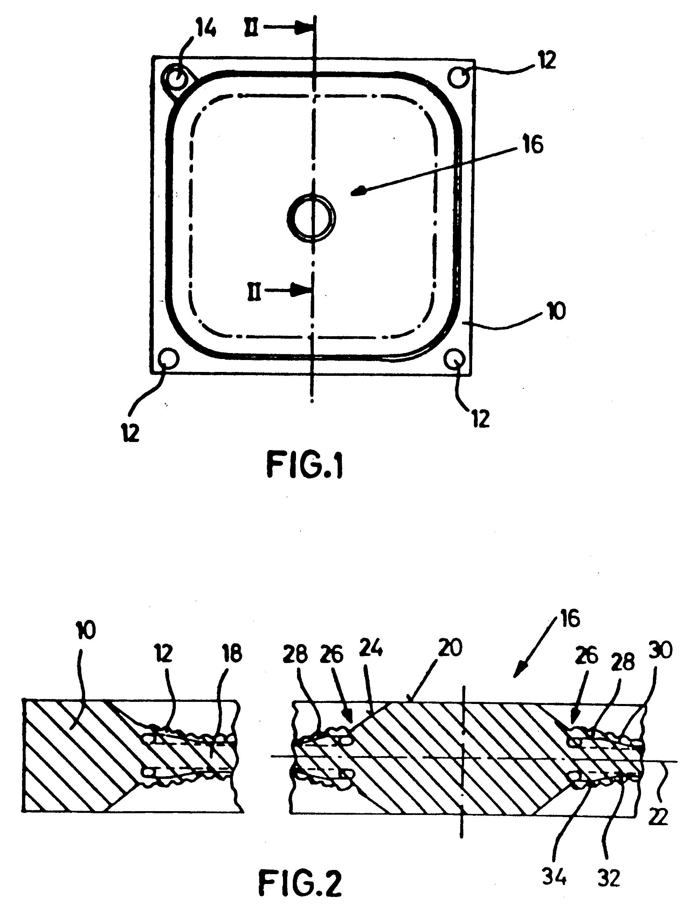

Wie Fig. 1 erkennen läßt, weist die dort gezeigte Membranfilterplatte einen umlaufenden Dichtrand 10 auf, der mit Eckbohrungen 12 sowie einer Eckeinlaufbohrung 14 versehen ist. Im Zentralbereich der Membranfilterplatte befindet sich ein Stütznocken 16. Die gesamte Membranfilterplatte oder, besser gesagt: Trägerplatte, da das aufzulegende Filtertuch in Fig. 1 nicht dargestellt ist, ist aus Vollkunststoff einstückig hergestellt, einschließlich des Stütznockens 16, und entspricht, abgesehen vom Aufbau des Stütznockens 16 und der damit zusammenhängenden Bereiche, in wesentlichen einer Membranfilterplatte, wie sie in der EP-A 0 081 715 beschrieben ist, auf die insoweit zur weiteren Erläuterung hinsichtlich der Funktionsweise derartiger Membranfilterplatten verwiesen wird.

Fig. 2 zeigt, daß der Dichtrand 10 in seinem Anlagebereich für eine Membran 28 so ausgebildet ist, wie dies in der bereits vorstehend genannten EP-A 0 081 715 beschrieben ist, also mit einer Schmiegefläche mit sich im wesentlichen kontinuierlich ändernder Krümmung zwischen der Verbindungslinie der Membran 28 mit dem Dichtrand 10 und dem im wesentlichen ebenen Zentralbereich der Trägerplatte 18. Fig. 2 zeigt, daß der Stütznocken 16 eine ebene Stirnfläche 20 aufweist, die sich parallel zur Trägerplattenmittelebene 22 erstreckt. Seitlich schließt an die Stirnfläche 20 des Stütznockens 16 eine schräge, zur Zentralnormalen des Stütznockens 16 auf die Trägerplattenmittelebene 22 rotationssymmetrische Seitenfläche 24 an. An eine Verbindungslinie 26 der Membran 28, die in bekannter Weise profiliert ist (vergleiche EP-A 0 081 715) mit dem Stütznocken 16 anschließend weist die Trägerplatte 18 eine Übergangsfläche 30 auf, die zur Erzeugung je einer Sollbiegelinie 32 für die Filtrationsphase und einer Sollbiegelinie 34 für die Abpreßphase zunächst, von der Zentralnormalen des Stütznockens 16 aus gesehen, im wesentlichen parallel zur Trägerplattenmittelebene 22, dann schräg unter einem Winkel von ca. 10° bis 15° auf die Trägerplattenmittelebene22 hin verlaufend und dann sich im wesentlichen parallel zur Trägerplattenmittelebene 22 erstreckend ausgebildet ist. Statt dessen könnte auch vorgesehen sein, daß zur Erzeugung der mittels der Sollbiegelinien 32, 34 erzeugten "Doppelscharnierwirkung", die in der EP-A 0 081 715 im Verhältnis zum Dichtrand ausführlich beschrieben ist, so daß auf die diesbezüglichen Erläuterungen verwiesen wird, eine Schmiegefläche mit kontinuierlich sich ändernder Krümmung vorgesehen ist.

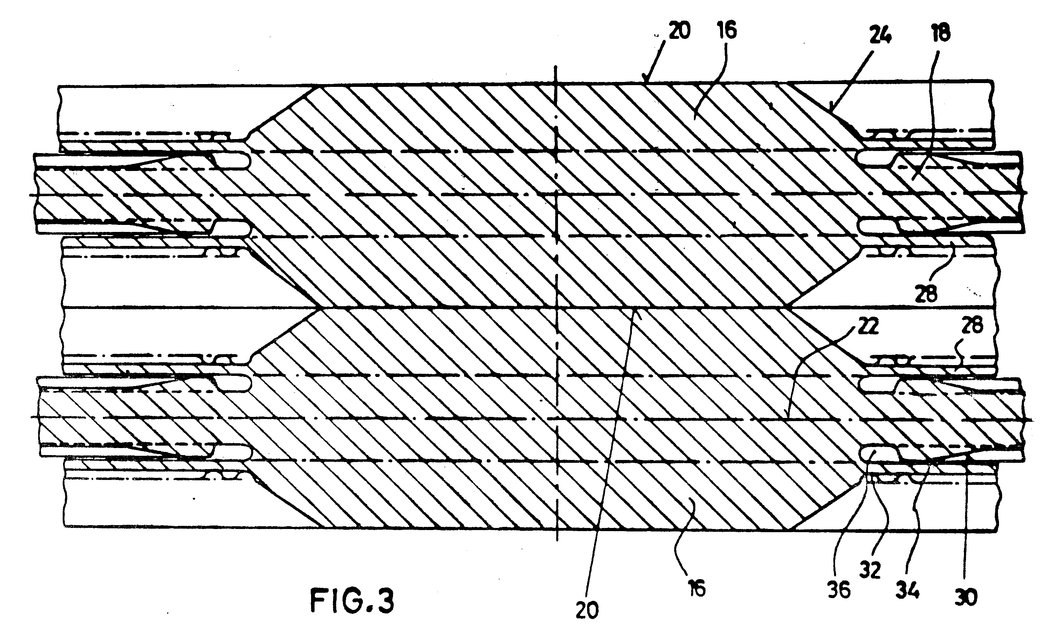

Fig. 3 zeigt die vorstehend bereits erläuterten Verhältnisse in Detaildarstellung, wobei gezeigt ist, wie zwei Stütznocken 16 zweier in einer Filterpresse aufeinandergelegter Membranfilterplatten mit ihren einander zugewandten Stirnflächen 20 stützend aneinanderliegen, wobei natürlich das nicht gezeigte Filtertuch zwischen den aneinander anliegenden Stirnflächen 20 der beiden Stütznocken 16 gehalten wird. Fig. 3 läßt auch deutlich eine Schweißaustriebsnut 36 erkennen, deren Funktion derjenigen analog ist, wie sie in der EP-A 0 081 715 bezüglich der Dichtrandkonstruktion erläutert ist.

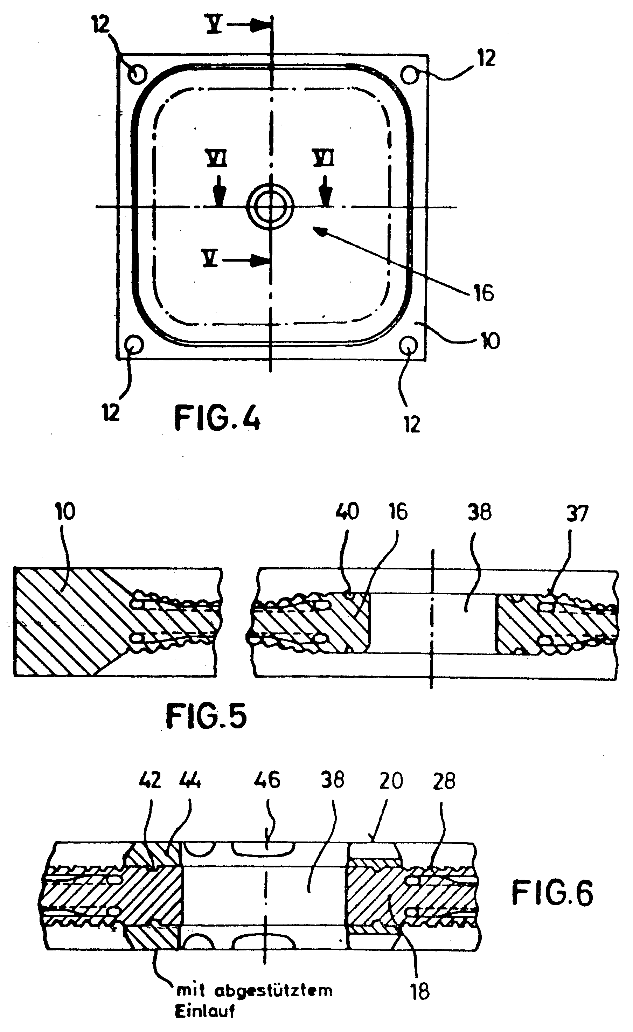

Bei dem in Fig. 4 gezeigten abgewandelten Ausführungsbeispiel der erfindungsgemäßen Membranfilterplatte weist der Dichtrand 10 vier Eckbohrungen 12 auf, wobei also kein Eckeinlauf vorgesehen ist, die sämtlich zum Miteinander-Verbinden in einer Filterpresse oder dergleichen aufeinandergestapelter Membranfilterplatten dienen. Der einzige, zentrale Stütznocken 16 ist, wie aus Fig. 5 ersichtlich, im wesentlichen bis auf die der Trägerplattenmittelebene 22 abgewandte Auflagefläche 37 der Membran 28 abgefräst und weist in seiner Ringfläche eine Zentriernut 40 auf, in die ein Zentrierwulst 42 eines Stützringes 44 eingreift, der eine die gesamte Trägerplatte 18 durchsetzende Zentralbohrung 38 umgibt und in der Seitenfläche 24 mit Durchbrechungen 46 versehen ist, welche ein Kommunizieren der Zentralbohrung (Zentraleinlaufbohrung) 38 mit der Filterkammer gewährleisten.

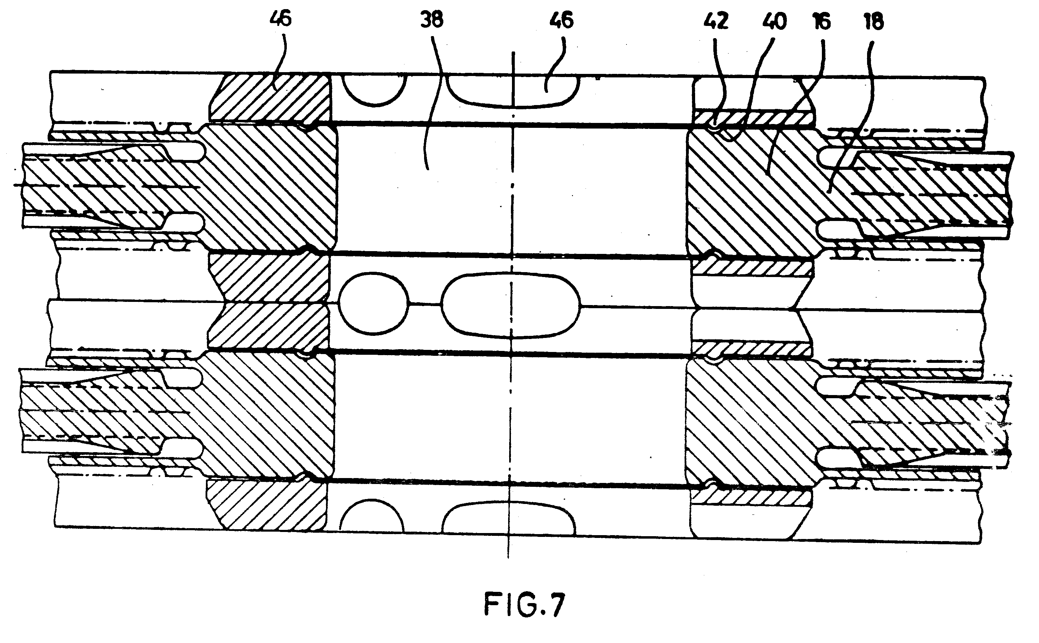

Die vorstehend beschriebene Membranfilterplatte kann demzufolge bei dem Ausführungsbeispiel, wie es in den Fig. 1 bis 3 gezeigt ist, mit einem im Gießvorgang stets hergestellten "stehenbleibenden" Stütznocken 16 verwendet werden, wobei also ein Eckeinlauf 14 vorgesehen ist. In diesem Fall hat der zentrale Stütznocken 16 gegenüber dem bislang verwendeten mehrfachen Stütznocken den Vorteil, daß die freie Membrandistanz zwischen Dichtrand 10 und Stütznocken 16 optimal lang ist, so daß weite, unbelastete Membranbewegungen möglich sind. Die andere Möglichkeit besteht darin, bei einem Ausführungsbeispiel von Fig. 4 bis Fig. 7, den Stütznocken gleichzeitig zum Schaffen eines Zentraleinlaufes 38 zu verwenden, wobei vorzugsweise gleichzeitig eine Filtertuchverschraubung erfolgt, wie aus der Zeichnung ersichtlich ist. Hier ist ein zusätzlicher Vorteil vorhanden, daß seitlich des Zentraleinlaufes keine weiteren Behinderungen der Strömungswege mehr zu besorgen sind.

## Patentansprüche

1. Verfahren zum Umgestalten einer Membranfilterplatte für eine Filterpresse oder dgl., die für den Eckeinlauf des zu filternden Mediums ausgelegt ist, für Zentraleinlaufanwendungsfälle, bei dem bei einer Membranfilterplatte

mit einer einstückig aus Kunststoff hergestellten Trägerplatte (18), wenigstens einer an einer Seite der Trägerplatte angeordneten, vorzugsweise mit Distanznocken oder dgl. zum Auflegen eines Filtertuches oder dgl. versehenen Membran (28) und einem die Trägerplatte und die Membran umgebenden, diese im wesentlichen fließmitteldicht miteinander verbindenden Dichtrand (10), dessen der Trägerplattenmittelebene (22) parallele Dichtfläche auf der die Membran aufweisenden Seite bzw. beiderseits der Trägerplatte mit Abstand von der Ebene der Membran in deren unbelasteter Normalstellung angeordnet ist bzw. sind, wobei im Zentralbereich der Trägerplatte (18) wenigstens ein zu einer Normalen zur Trägerplattenmittelebene rotationssymmetrischer, einstückig mit der Trägerplatte ausgebildeter Stütznocken (16) vorgesehen ist, dessen der Trägerplattenmittelebene (22) parallele Stirnfläche (20) im wesentlichen mit der der Trägerplattenebene parallelen Dichtfläche des Dichtrandes (10) fluchtet und der seitlich eine der Membran (28) zugewandte rotationssymmetrische Übergangsfläche (30) aufweist, die schräg in Richtung auf die Trägerplattenmittelebene (22) hin verläuft und die von einer Verbindungslinie (26) der Membran (28) mit dem Stütznocken (16) aus zur Erzeugung je einer Sollbiegelinie (32,34) für die Filtrations- bzw. die Abpreßphase zunächst im wesentlichen parallel zur Trägerplattenmittelebene (22), dann schräg unter einem Winkel von 3° bis 15°, vorzugsweise 10° bis 15°, auf diese hin verlaufend und alsdann parallel zur Trägerplattenmittelebene (22) sich erstreckend oder unter Vermeidung definierter Biegelinien als mit kontinuierlich sich ändernder Biegung von der Verbindungslinie (26) in die Trägerplattenfläche übergehende Schmiegefläche ausgebildet ist,
der Stütznocken (16) bis auf die Ebene der Auflagefläche (37) der Membran (28) abgetragen, vorzugsweise abgefräst, und mit einer die gesamte Trägerplatte (18) durchsetzenden Zentralbohrung (38) versehen wird, die über in einer Seitenfläche (24), welche an die Stirnfläche (20) anschließt und zur Verbindungslinie (26) der Membran mit dem Stütznocken (16) abfällt, vorgesehene Durchbrechungen (46) mit der jeweiligen Filterkammer kommuniziert, wobei die Seitenfläche (24) des Stütznockens (16) Bestandteil eines an die Trägerplatte anzusetzenden Stützringes (44) ist.

2. Verfahren nach Anspruch 1, dadurch gekennzeichnet, daß auf die durch Abtragen entstandene Ringfläche des Stütznockens (16) ein Stützring (44) gesetzt wird.

3. Verfahren nach Anspruch 1 oder 2, dadurch gekennzeichnet, daß in die Ringfläche des Stütznockens (16) eine Zentriernut (40) eingearbeitet wird, in die eine am Stützring (44) vorgesehene Zentrierwulst (42) eingreift, oder umgekehrt.

4. Verfahren nach einem der Ansprüche 1 bis 3, dadurch gekennzeichnet, daß die am Stütznokken (16) vorgesehene Seitenfläche (24) rotationssymmetrisch abgeschrägt ist.

5. Verfahren nach Anspruch 3, dadurch gekennzeichnet, daß der Stützring (44) mit der Trägerplatte (18) verschraubt wird.

6. Verfahren nach einem der Ansprüche 2 bis 5, dadurch gekennzeichnet, daß der Stützring (44) als Filtertuchverschraubung ausgebildet ist.

7. Verfahren nach einem der Ansprüche 3 bis 6, dadurch gekennzeichnet, daß die Zentrierwulst (42) als Halterung für das Filtertuch ausgebildet ist.

8. Verfahren nach einem der Ansprüche 1 bis 7, dadurch gekennzeichnet, daß lediglich ein einziger, mittig auf der Trägerplatte (18) angeordneter Stütznocken (16) vorgesehen ist.

**Claims**

1. A method of converting a diaphragm filter plate which is of use for a filter press or the like, and is designed for corner entry of the medium to be filtered, for use with central entry, wherein in the case of a dipharagm filter plate which has:

A unitary plastics support plate (18); at least one diaphragm (28) disposed on one side of the support plate (18) and preferably having spacer projections or the like on which a straining cloth or the like can be placed. and a sealing edge (10) which extends around the support plate (18) and the diaphragm and interconnects them in a manner impervious to the flowing medium, that sealing surface of the sealing edge (10) which is parallel to the support plate centre-plane (22) being so disposed on the diaphragm-receiving side or both sides of the support plate (18) as to be at a distance from the plane of the diaphragm when the same is in its normal unstressed position, at least one support pad (16) which is unitary with the support plate (18) and is symmetrical in rotation about a perpendicular to the support plate centre-plane being provided, the support pad end face (20) which is parallel to the support plate centre-plane (22) being in substantial registration with that sealing surface of the sealing edge (10) which is parallel to the suport plate plane (22), the support pad (16) having laterally a transition surface (30) which is near the diaphragm (28) and symmetrical in rotation, extends inclinedly towards the support plate centre-plane (22) and, to produce a respective reference bend line (32, 34) for the filtering and squeezing phase, extends, from a line (26) connecting the diaphragm (28) to the support pad, initially substantially parallel to the support plate centre-plane (22), then inclinedly at an angle of from 3° to 15°, preferably 10° to 15°, towards such plane (22), thereafter to extend parallel thereto or without forming defined bend lines as a bevelled transition surface with a continuously varying bending from the connecting line (26) to the support plate surface,
the support pad (16) is reduced, preferably by machining, as far as the plane of the bearing surface (37) of the diaphragm (28) and is formed with a central bore (38) which extends right through the support plate (18) and which communicates with the filter chamber by way of perforations (46) disposed in a side surface (24) into which the end face (20) merges and which descends towards the line (26) connecting the diaphragm to the support pad (16), the side surface (24) thereof being part of a support ring (44) engageable on the support plate (18).

2. A method according to claim 1, characterised in that a support ring (44) is placed on that annular surface of the support pad (16) which has arisen as a result of the removal of material.

3. A method according to claim 1 or 2, characterised in that the annular surface of the support pad (16) is formed with a centring groove (40) engageable by a centring bead (42) on the support ring (44) or *vice versa*.

4. A method according to any of claims 1 - 3, characterised in that the side surface (24) on the support pad (16) is symmetrical in rotation.

5. A method according to claim 1, characterised in that the support ring (44) is screwed to the support plate (18).

6. A method according to any of claims 2 to 5, characterised in that the support ring (44) is in the form of a straining cloth screwed fastening.

7. A method according to any of claims 3 - 6, characterised in that the centring bead (42) is devised as retaining means for the straining cloth.

8. A method according to any of claims 1 to 7, characterised in that merely a single support pad (16) disposed centrally on the support plate (18) is provided.

**Revendications**

1. Procédé pour modifier une plaque filtrante à membrane pour filtre de presse ou analogue, initialement prévue pour une entrée d'angle de la substance à filtrer, pour une utilisation avec entrée centrale dans lequel

la plaque filtrante à membrane comprend une plaque porteuse (18) d'une pièce en matière plastique, au moins une membrane (28) disposée sur l'un des côtés de la plaque porteuse, de préférence pourvue de bossages d'écartement ou analogues pour poser le tissu filtrant ou analogue et un collet d'étanchéité (10) entourant la plaque porteuse et la membrane et les reliant entre elles d'une manière étanche au liquide, dont la surface d'étanchéité parallèle au plan médian (22) de la plaque porteuse est disposée sur le côté comportant la membrane, respectivement des deux côtés de la plaque porteuse, à une distance du plan de la membrane, en position normale non chargée, au moins un bossage support (16) faisant partie intégrante de la plaque porteuse étant prévu dans la zone centrale de la plaque porteuse (18), dont la face frontale (20) parallèle au plan central (22) de la plaque porteuse, s'aligne sur la surface d'étanchéité du collet d'étanchéité (10) et qui comporte sur une face de transition (30) tournée vers la membrane (28), en symétrie de rotation, qui s'étend en diagonale en direction du plan médian (22) de la plaque porteuse et qui de développe, à partir d'une ligne de raccord (26) entre la membrane (28) et la bosse support (16), produisant une ligne destinée à la rupture (32, 34) dans la phase de filtrage et de pressage, respectivement, d'abord en parallèle au plan médian (22) de la plaque porteuse, ensuite en diagonale, selon un angle de 3° à 10,° de préférence de 10° à 15°, par rapport au plan médian (22) de la plaque porteuse ou, en évitant des lignes de pliage définies, en forme de surface d'assemblage, passant de la ligne de raccord (26), selon une courbure continue, dans la surface de la plaque porteuse,

la bosse support (16) rasée, de préférence fraisée, jusqu'au plan de la surface porteuse (37) de la membrane (28), comportant une ouverture centrale (38) traversant toute la plaque porteuse (18), communiquant avec la chambre filtrante correspondante à travers des découpures (46) prévues dans la face latérale (24) s'ajoutant à la face frontale (20) et s'inclinant vers la ligne de raccord (26) entre la membrane et la bosse support (16), les faces latérales (24) du bossage support (16) faisant partie d'un anneau de support à poser sur la plaque porteuse (44).

2. Procédé selon la revendication 1 caractérisé en ce que dans la surface annulaire créée par le fraisage du bossage support (16) est posé un anneau support (44).

3. Procédé selon l'une quelconque des revendications 1 ou 2, caractérisé en ce que dans la surface annulaire du bossage support (16) est prévue une rainure de centrage (40) dans laquelle s'introduit un bourrelet de centrage (42) prévu sur l'anneau de support (44) ou inversement.

4. Procédé l'une quelconque des revendications 1 à 3, caractérisé en ce que les faces latérales (24) prévues à la bosse support (16) sont biseautées en symétrie de rotation.

5. Procédé selon la revendication 3, caractérisé en ce que l'anneau support (44) est boulonné sur la plaque porteuse (18).

6. Procédé selon l'une quelconque des revendications 2 à 5, caractérisé en ce que l'anneau support (44) a la forme d'une fixation pour le tissu filtrant.

7. Procédé selon l'une quelconque des revendications 3 à 6, caractérisé en ce que le bourrelet de centrage (42) sert de tissu filtrant.

8. Procédé selon l'une quelconque des revendications 1 à 7, caractérisé en ce qu'il est prévue une seule bosse support (16) au milieu de la plaque porteuse (18).

FIG.1

FIG.2

FIG.3

FIG.4

FIG.5

FIG.6

mit abgestütztem
Einlauf

FIG.7

EP 0 233 980 B1